# EUROPEAN PATENT APPLICATION

(11) **EP 1 916 454 A1**
(43) Date of publication of application: **30.04.2008**
(21) Application number: 07020228.8
(22) Date of filing: 16.10.2007
(51) Int. Cl.: F16H 61/662

(54) **Hydraulic control device and method for continously variable transmission**

(30) Priority: 24.10.2006 JP 2006288546
(71) Applicant: JATCO Ltd, Fuji-shi, Shizuoka 417-8585 (JP)
(72) Inventor: Morita, Yoshio, Fuji-shi Shizuoka 417-8585 (JP); Wakayama, Hideshi, Fuji-shi Shizuoka 417-8585 (JP)
(74) Representative: Schaeberle, Steffen

(57) **Abstract**

A hydraulic pressure control device is provided to control hydraulic fluid pressure supplied to pulleys of a continuously variable transmission to change a gear ratio. A line pressure regulating component (40) is controlled by a hydraulic CVT controller to regulate line pressure from a hydraulic fluid pump. A secondary pressure regulating component (46,54) regulates the line pressure to supply a target pressure to the secondary pulley such that the target pressure increases as the signal pressure increases. A signal pressure regulating component (52) adjusts the signal pressure by draining the hydraulic fluid from a pilot line pressure such that the signal pressure increases as the aperture size of the solenoid valve increases. The signal pressure regulating component regulates the signal pressure so that the target pressure supplied to the secondary pulley is at a maximum from a time the forward clutch is released to a time the forward clutch is re-engaged.

## Description

### CROSS-REFERENCE TO RELATED APPLICATIONS

This application claims priority to Japanese Patent Application No. 2006-288546, filed on October 24, 2006. The entire disclosure of Japanese Patent Application No. 2006-288546 is hereby incorporated herein by reference.

### BACKGROUND OF THE INVENTION

### Field of the Invention

The present invention generally relates to a hydraulic control device for a belt-type continuously variable transmission.

### Background Information

A continuously variable transmission typically has a primary or input pulley and a secondary or output pulley connected by a drive belt (e.g. V-belt) with the effective diameters of the primary and secondary pulleys being continuously adjustable to control the output of the transmission. When the shift position changes from the neutral range (N range) to the drive range (D range) in a vehicle having a continuously variable transmission, the pressure being supplied to a forward clutch increases, the forward clutch engages, and torque is transmitted from the engine to the continuously variable transmission. A hydraulic fluid pressure pump is driven by the engine of the vehicle to supply hydraulic fluid pressure to the forward clutch and the adjustable pulleys of the continuously variable transmission. An example of such a continuously variable transmission is disclosed in Japanese Laid-Open Patent Application No. 2004-125055.

In view of the above, it will be apparent to those skilled in the art from this disclosure that there exists a need for an improved hydraulic control device. This invention addresses this need in the art as well as other needs, which will become apparent to those skilled in the art from this disclosure.

### SUMMARY OF THE INVENTION

It has been discovered that in the conventional control of a continuously variable transmission, the vehicle may be caused to quickly move forward after shifting from the neutral range (N range) to the drive range (D range). Therefore, the pressure supplied to the forward clutch must be increased in order to improve the response when the forward clutch engages. However, since the engine is kept at a low rotational rate during idling, the amount discharged by the hydraulic fluid pressure pump is low, and the amount of fluid supplied to the forward clutch can be difficult to supply reliably. This can result in delayed engaging of the forward clutch, or, afterwards, sudden engaging of the clutch and shock.

Therefore, one object of the present invention is to improve a balance of the amount of fluid in a hydraulic circuit of a continuously variable transmission so that the pressure can be reliably supplied to the forward clutch when a vehicle starts to move.

In accordance with one aspect of the present invention, a hydraulic pressure control device is provided that basically comprises a hydraulic CVT controller, a line pressure regulating component, a secondary pressure regulating component and a signal pressure regulating component. The hydraulic CVT controller is configured to control hydraulic fluid pressure of hydraulic fluid supplied from a hydraulic fluid pump driven by an engine to primary and secondary pulleys of a continuously variable transmission to change a gear ratio and to a forward clutch operatively disposed between the engine and the primary pulley to selectively engage and disengage engaged the engine and the primary pulley using the hydraulic fluid pressure supplied from the hydraulic fluid pump. The line pressure regulating component is controlled by the hydraulic CVT controller to regulate the hydraulic fluid pressure supplied as line pressure from the hydraulic fluid pump. The secondary pressure regulating component fluidly coupled to the line pressure regulating component to regulate the line pressure from the line pressure regulating component to supply a target pressure to the secondary pulley such that the target pressure supplied to the secondary pulley increases as the signal pressure increases. The signal pressure regulating component fluidly is coupled to the secondary pressure regulating component to adjust the signal pressure to the secondary pressure regulating component by draining the hydraulic fluid from a pilot line pressure such that the signal pressure increases as the aperture size of the solenoid valve increases. The hydraulic CVT controller is configured to control the signal pressure regulating component to regulate the signal pressure so that the target pressure supplied to the secondary pulley is at a maximum from a time the forward clutch is released to a time the forward clutch is re-engaged.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a schematic diagram showing a hydraulic control device for a belt-type continuously variable transmission device in accordance with one embodiment of the present invention;

Figure 2 is a circuit diagram showing a hydraulic circuit of the hydraulic control device for a belt-type continuously variable transmission according to the present embodiment;

Figure 3 is a cross section showing the internal structure of a secondary solenoid; and

Figure 4 is a flowchart showing the control of the hydraulic control device for a belt-type continuously variable transmission according to the present embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

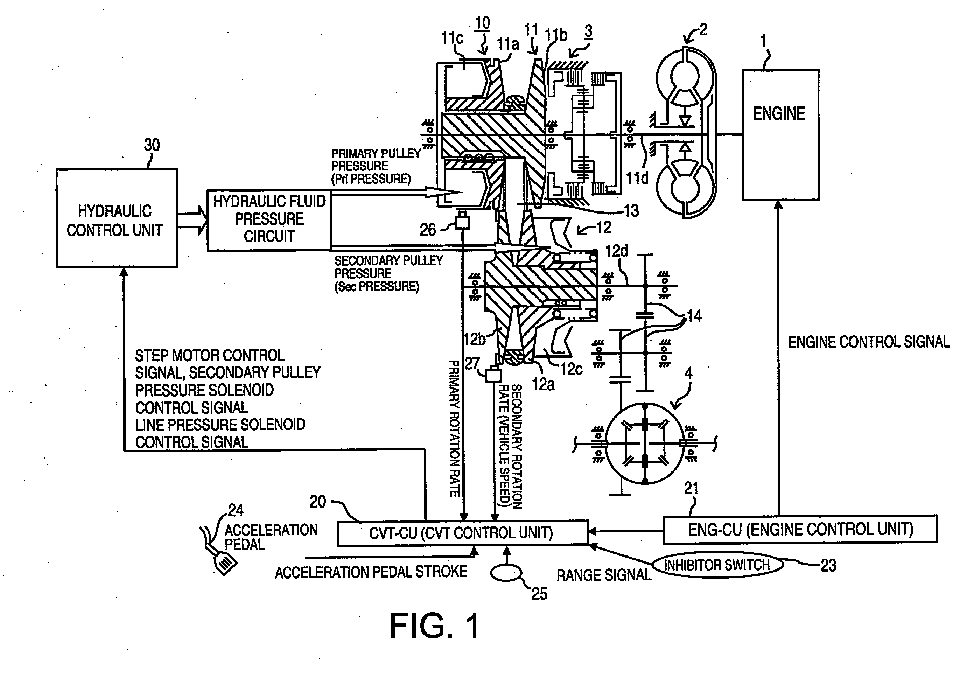

Referring initially to Figure 1, a drive train is schematically illustrated with an engine 1, a torque converter 2, a forward/reverse switching mechanism 3, a differential 4 and a belt-type continuously variable transmission 10 that is equipped with a hydraulic line pressure control device in accordance with one preferred embodiment of the present invention. In Figure 1, the belt-type continuously variable transmission 10 basically includes a primary pulley 11, a secondary pulley 12, a drive belt or V-belt 13, a CVT control unit 20 (hereafter referred to as "CVT- CU"), and a hydraulic control unit 30. The CVT- CU 20 and the hydraulic control unit 30 constitute a hydraulic CVT controller.

The primary pulley 11 is an input shaft pulley on the input shaft side for inputting rotation from the engine 1 into the continuously variable transmission 10. The primary pulley 11 includes a movable conical sheave 11a and a stationary or fixed conical sheave 11. The movable conical sheave 11a is disposed opposite the fixed conical sheave 11b to form a V-shaped pulley groove. The movable conical sheave 11a is displaceable in an axial direction by hydraulic fluid pressure operating toward a primary pulley cylinder chamber 11c. The fixed conical sheave 11b rotates integrally with an input shaft 11d. The primary pulley 11 is connected to the engine 1 via the forward/reverse switching mechanism 3 and the torque converter 2. The torque converter 2 preferably comprising a lock-up clutch. The primary pulley 11 transmits the rotation of the engine 1 to the secondary pulley 12 by the drive belt 13. The rate at which the primary pulley 11 rotates is detected by a primary pulley rotation rate sensor 26.

The drive belt 13 wraps around the primary pulley 11 and the secondary pulley 12, and transmits the rotation of the primary pulley 11 to the secondary pulley 12. The secondary pulley 12 outputs the rotation transmitted via the drive belt 13 to the differential 4. The secondary pulley 12 basically includes a movable conical sheave 12a and a stationary or fixed conical sheave 12b. The moveable conical sheave 12a is disposed opposite the fixed conical sheave 12b to form a V-shaped pulley groove. The moveable conical sheave 12a is displaceable in an axial direction in accordance with the hydraulic fluid pressure operating toward a secondary pulley cylinder chamber 12c. The conical sheave 12b rotates integrally with an output shaft 12d. The pressure-receiving surface area of the secondary pulley cylinder chamber 12c is set to be substantially equivalent to that of the primary pulley cylinder chamber 11c.

The secondary pulley 12 is connected to the differential 4 via idler gears 14. The secondary pulley 12 outputs rotation to the differential 4. The rate at which the secondary pulley 12 rotates is detected by a secondary pulley rotation rate sensor 27. The vehicle speed can be calculated from the rotation rate of the secondary pulley 12.

The CVT-CU 20 determines the contact frictional force and the transmission gear ratio (the value obtained from dividing the effective radius of the secondary pulley 12 by the effective radius of the primary pulley 11), and then transmits a command to the hydraulic control unit 30 for controlling the continuously variable transmission 10. The CVT-CU 20 performs these actions based on the signals from an inhibitor switch 23, an accelerator pedal stroke sensor 24, a fluid temperature sensor 25, the primary pulley rotation rate sensor 26, the secondary pulley rotation rate sensor 27, and other sources, as well as input torque information from an engine control unit 21.

The hydraulic control unit 30 is actuated according to the command from the CVT-CU 20. The hydraulic control unit 30 controls the hydraulic fluid pressure supplied to the primary pulley 11 and the secondary pulley 12, and moves the moveable conical sheave 11a and the moveable conical sheave 12a the direction of the rotational axis.

The width of the pulley groove changes when the movable conical sheave 11a and the movable conical sheave 12a move. The V-belt 13 then moves on the primary pulley 11 and secondary pulley 12. As a result, the contact radius of the V-belt 13 changes with respect to the primary pulley 11 and the secondary pulley 12, and the transmission gear ratio and the contact frictional force of the V belt 13 are controlled.

The rotation of the engine 1 is delivered to the belt-type continuously variable transmission 10 via the torque converter 2 and the forward/reverse switching mechanism 3. Thus, the rotation of the engine 1 is transmitted from the primary pulley 11 to the differential 4 via the V-belt 13 and the secondary pulley 12.

When an acceleration pedal 24 is depressed, or gears are shifted in manual mode, the movable conical sheave 11 a of the primary pulley 11 and the movable conical sheave 12a of the secondary pulley 12 are displaced along the axial direction, and the radius of contact with respect to the V-belt 13 is changed, whereby the transmission gear ratio is continuously changed.

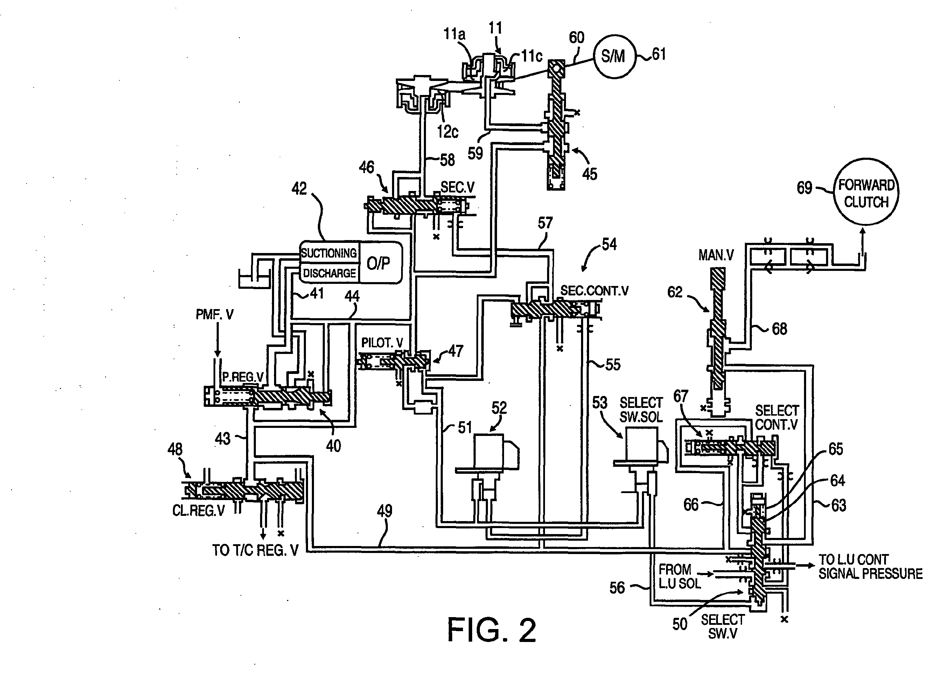

Figure 2 is a circuit diagram that shows a hydraulic fluid pressure circuit of the hydraulic control device for the belt-type continuously variable transmission 10 according to the illustrated embodiment. The various components of the hydraulic fluid pressure circuit (Figure 2) are controlled by the hydraulic control unit 30 to improve the balance in the amount of hydraulic fluid when the vehicle starts to move.

A pressure regulator valve 40 (line pressure regulating component) drains some of the discharge pressure supplied from a hydraulic fluid pump 42 to a fluid channel 43 via a fluid channel 41, and thereby regulates the hydraulic fluid pressure within the fluid channel 41 as a line pressure in response to commands from by the hydraulic control unit 30. A fluid channel 44 that branches off from the fluid channel 41 supplies the line pressure to a gear changing control valve 45, a secondary valve 46, and a pilot valve 47. The hydraulic fluid pressure drained from the pressure regulator valve 40 is supplied to a clutch regulator valve 48 via the fluid channel 43.

The clutch regulator valve 48 drains some of the hydraulic fluid pressure drained from the pressure regulator valve 40, and thereby regulates the hydraulic fluid pressure in the fluid channel 43 as clutch pressure. A fluid channel 49 that branches from the fluid channel 43 supplies the clutch pressure to a select switch valve 50.

The pilot valve 47 reduces the line pressure supplied via the fluid channel 44 to a fixed pressure corresponding to the set weight load of a spring, and regulates the pressure as pilot pressure. The pilot pressure is supplied to a secondary solenoid 52 and a select switch solenoid 53 via a fluid channel- 51.

In the secondary solenoid 52, the fluid channel 51 is connected to an input port of the secondary solenoid 52 for supplying the pilot pressure and a fluid channel 55 in communication with a secondary control valve 54 is connected to an output port of the secondary solenoid 52. The secondary solenoid 52 constitutes a signal pressure regulating component that regulates the pilot pressure according to a current supplied thereto, and supplies the pilot pressure as signal pressure to the secondary control valve 54. The secondary valve 46 and secondary control valve 54 constitutes a secondary pressure regulating component.

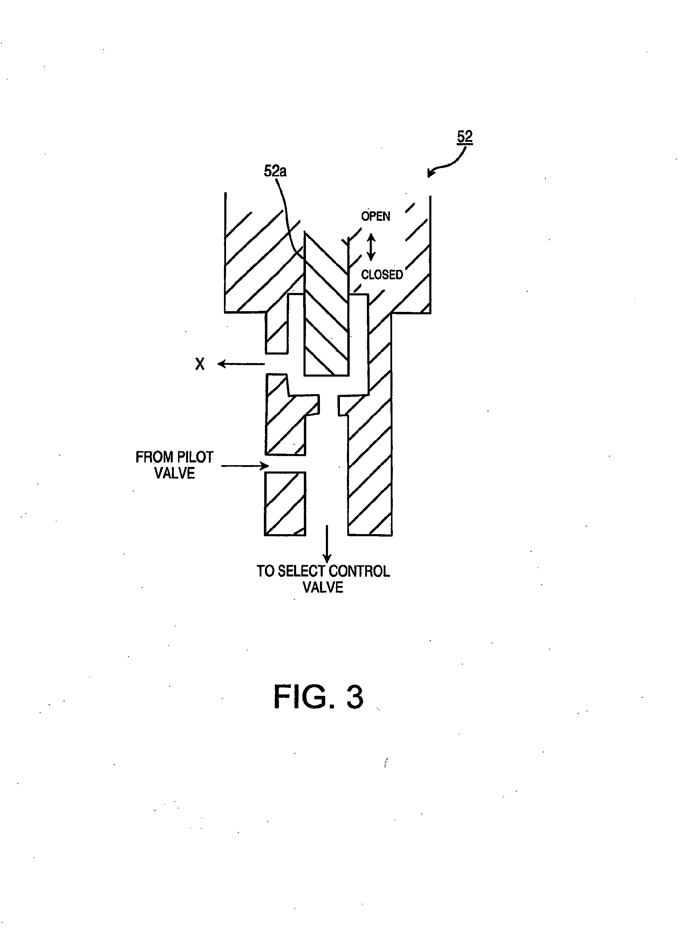

The secondary solenoid 52 is a linear solenoid that can adjust the aperture of a solenoid valve 52a based on a command signal from the hydraulic control unit 30. As shown in Figure 3, some of the pilot pressure supplied from the fluid channel 51 drains in correspondence with the aperture of the solenoid valve 52a. The remaining hydraulic fluid pressure is supplied to the secondary control valve 54. Specifically, the hydraulic fluid pressure supplied to the secondary control valve 54 increases as the aperture of the solenoid valve 52a decreases.

In the select switch solenoid 53, the fluid channel 51, which supplies the pilot pressure, is connected to an input port of the select switch solenoid 53, and a fluid channel 56, which communicates with the select switch valve 50, is connected to an output port of the select switch solenoid 53. The select switch solenoid 53 is switched ON or OFF according to a current supplied to its solenoid based on a command signal from the hydraulic control unit 30. In the ON state, the pilot pressure is supplied as signal pressure to the select switch valve 50.

In the secondary control valve 54, the fluid channel 49 is connected to an input port of the secondary control valve 54, and a fluid channel 57, which communicates with the secondary valve 46, is connected to an output port of the secondary control valve 54. The secondary control valve 54 regulates the clutch pressure as the signal pressure of the secondary valve 46 according to the signal pressure supplied from the secondary solenoid 52 via the fluid channel 57, and supplies the resulting pressure to the secondary valve 46.

In the secondary valve 46, the fluid channel 44 is connected to an input port of the secondary valve 46, and a fluid channel 58, which communicates with the secondary pulley cylinder 12c, is connected to an output port of the secondary valve 46. The secondary valve 46 reduces the line pressure according to the signal pressure supplied from the secondary control valve 54 via the fluid channel 57, and supplies the line pressure to the secondary pulley cylinder 12c.

In the gear change control valve 45, the fluid channel 44 is connected to an input port of the gear change control valve 45, and a fluid channel 59, which communicates with the primary pulley cylinder chamber 11c, is connected to an output port of the gear change control valve 45. The gear change control valve 45 reduces the line pressure according to the operation of a servo link 60 that constitutes a mechanical feedback mechanism, and supplies the line pressure to the primary pulley cylinder chamber 11c. The gear change control valve 45 is driven by a stepper motor 61 that is connected to one end of the servo link 60 and is provided with feedback in regard to the groove width, i.e., the actual transmission gear ratio, from the movable conical sheave 11a of the primary pulley that is connected to the other end. The stepper motor 61 is controlled based on a command signal from the hydraulic control unit 30.

In the select switch valve 50, the fluid channel 49 is connected to an input port; and a fluid channel 63, which communicates with a manual valve 62, is connected to an output port. The select switch valve 50 switches the connecting fluid channel, with the output pressure of the select switch solenoid 53 supplied via the fluid channel 56 being used as the signal pressure.

When the select switch solenoid 53 is ON, a spool valve 64 of the select switch valve 50 slides upward in the drawing, against the urging force of a spring 65. The clutch pressure supplied from the fluid channel 49, after being passed through a fluid channel 66 that branches off from the fluid channel 49 and regulated by a select control valve 67, is accordingly supplied to a forward clutch 69 via the select switch valve 50, the fluid channel 63, the manual valve 62, and a fluid channel 68.

When the select switch solenoid 53 is OFF, the spool valve 64 of the select switch valve 50 slides downward in the drawing via the urging force of the spring 65. The clutch pressure supplied from the fluid channel 49 is accordingly supplied to the forward clutch 69 via the select switch valve 50, the fluid channel 63, the manual valve 62, and a fluid channel 68. The forward clutch 69 engages, and is thereby able to transmit the driving force of the engine 1 to the variable transmission 10. The forward clutch 69 is configured so that the transmittable torque increases as the pressure supplied to the forward clutch 69 increases.

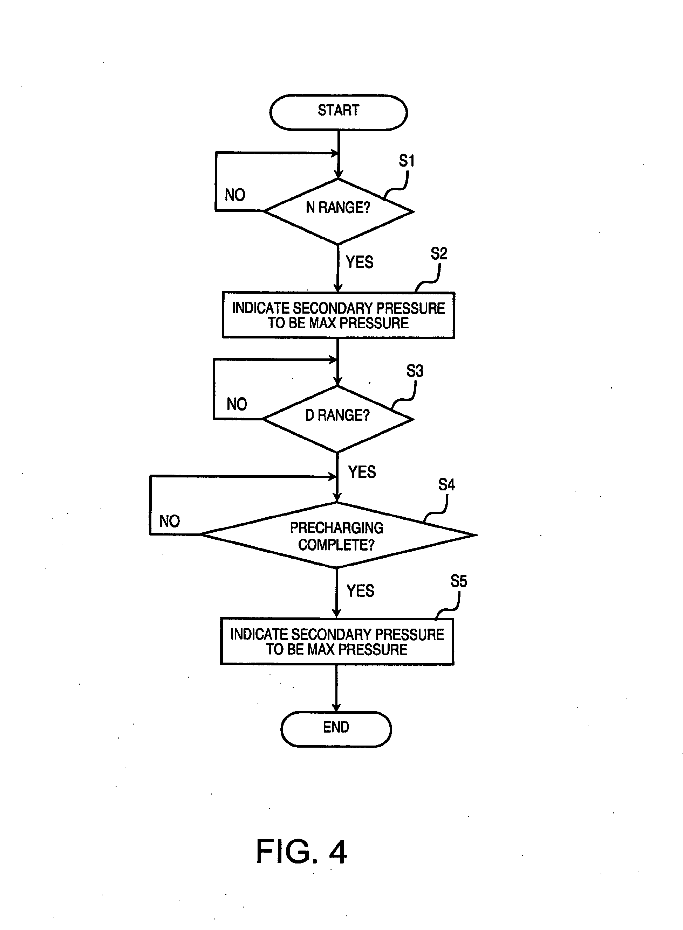

The control performed by the hydraulic CVT controller (the CVT- CU 20 and the hydraulic control unit 30) is described below with reference being made to the flowchart of Figure 4. The various components of the hydraulic fluid pressure circuit (Figure 2) are controlled by the hydraulic control unit 30 in response to commands from the CVT- CU 20 to improve the balance in the amount of hydraulic fluid so that the hydraulic fluid pressure supplied to the forward clutch 69 can be reliable provided when the vehicle starts to move. According to the illustrated embodiment, when the forward clutch 69 is released, the signal pressure is regulated so that the pressure supplied to the secondary pulley 12 reaches a maximum. Therefore, the solenoid valve 52a will be at the minimum aperture size, and the amount of the hydraulic fluid drained will at a minimum. The amount of hydraulic fluid will accordingly decrease, and the balance in the amount of fluid supplied in the overall hydraulic circuit is improved.

In step S1, a decision by the CVT- CU 20 is made as to whether or not the shift position is within the N range. If the shift position is in the N range, then the process proceeds to step S2. If the shift position is outside of the N range, then the process returns to step S1.

In step S2, the secondary pressure is indicated as being the maximum (MAX) pressure. As a result, the solenoid valve 52a of the secondary solenoid 52 is completely closed by the hydraulic control unit 30, and the amount of the hydraulic fluid pressure being drain becomes zero. The signal pressure accordingly reaches its maximum, and the secondary pressure becomes the MAX pressure.

In step S3, a decision by the CVT- CU 20 is made as to whether or not the shift position is within the D range. If the shift position is in the D range, then the process proceeds to step S4. If the shift position is outside of the D range, then the process returns to step S3.

In step S4, a decision by the CVT- CU 20 is made as to whether or not precharging has concluded. With precharging, when the shift position is switched from the N range to the D range and the forward clutch 69 is engaged, the pressure supplied to the forward clutch 69 is reduced to an initial forward clutch engagement pressure after the supply pressure has been maintained in a state of maximum pressure for a prescribed period of time. Precharging is performed in order to quickly move the forward clutch to the initial engaging state.

In step S5, the indication that the secondary pressure is MAX pressure is terminated. The aperture of the solenoid valve 52a of the secondary solenoid 52 is accordingly controlled by the hydraulic control unit 30 so that a desired secondary pressure is reached.

In the present embodiment, as described above, the signal pressure is regulated so that the pressure supplied to the secondary pulley 12 is at a maximum from the time the shift position is within the N range to the time the position changes into the D range and precharging concludes. Therefore, the solenoid valve 52a closes completely, and the amount in which the hydraulic fluid is drained is zero. As a result, the amount of wasted fluid decreases, and the balance in the fluid supplied through the overall hydraulic circuit improves. The hydraulic fluid pressure supplied to the forward clutch 69 can be maintained even during periods of idling, when the rate of engine rotation is low. It is also possible to prevent any jerkiness when the vehicle starts to move as caused by delayed clutch engagement, and also to prevent shock from occurring as a result of sudden engaging of the clutch thereafter.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A hydraulic control device for a belt-type continuously variable transmission (10) comprising:
a hydraulic CVT controller (20, 30) configured to control hydraulic fluid pressure of hydraulic fluid supplied from a hydraulic fluid pump (42) driven by an engine (1) to primary and secondary pulleys (11, 12) of a continuously variable transmission (10) to change a gear ratio and to a forward clutch (69) operatively disposed between the engine (1) and the primary pulley (11) to selectively engage and disengage engaged the engine (1) and the primary pulley (11) using the hydraulic fluid pressure supplied from the hydraulic fluid pump (42);
a line pressure regulating component (40) controlled by the hydraulic CVT controller to regulate the hydraulic fluid pressure supplied as line pressure from the hydraulic fluid pump (42);
a secondary pressure regulating component (46, 54) fluidly coupled to the line pressure regulating component (40) to regulate the line pressure from the line pressure regulating component (40) to supply a target pressure to the secondary pulley (12) such that the target pressure supplied to the secondary pulley (12) increases as the signal pressure increases; and
a signal pressure regulating component (52) fluidly coupled to the secondary pressure regulating component (46, 54) to adjust the signal pressure to the secondary pressure regulating component (46, 54) by draining the hydraulic fluid from a pilot line pressure such that the signal pressure increases as the aperture size of the solenoid valve (52a) increases;
the hydraulic CVT controller (20, 30) is configured to control the signal pressure regulating component (52) to regulate the signal pressure so that the target pressure supplied to the secondary pulley (12) is at a maximum from a time the forward clutch (69) is released to a time the forward clutch (69) is re-engaged.

2. The hydraulic control device according to claim 1, further comprising
the hydraulic CVT controller (20, 30) is further configured to perform precharging in which the hydraulic fluid pressure supplied to the forward clutch (69) is temporarily increased and is then subsequently reduced to an initial engagement pressure of the forward clutch (69) when a shift position is detected as being changed from an neutral range to a drive range; and
the signal pressure regulating component (52) regulating the signal pressure so that, from a time that the shift position reaches the neutral range to a time that the precharging concludes, the target pressure supplied to the secondary pulley (12) is at a maximum.

3. A hydraulic control method comprising:
controlling hydraulic fluid pressure of hydraulic fluid supplied from a hydraulic fluid pump (42) driven by an engine (1) to primary and secondary pulleys (11, 12) of a continuously variable transmission (10) to change a gear ratio and to a forward clutch (69) operatively disposed between the engine (1) and the primary pulley (11) to selectively engage and disengage engaged the engine (1) and the primary pulley (11) using the hydraulic fluid pressure supplied from the hydraulic fluid pump (42);
regulating the hydraulic fluid pressure supplied as line pressure from the hydraulic fluid pump (42);
regulating the line pressure to supply a target pressure to the secondary pulley (12) such that the target pressure supplied to the secondary pulley (12) increases as the signal pressure increases;
adjusting the signal pressure by draining the hydraulic fluid from a pilot line pressure using a solenoid valve (52a) such that the signal pressure increases as an aperture size of the solenoid valve (52a) increases; and
regulating the signal pressure so that the target pressure supplied to the secondary pulley (12) is at a maximum from a time the forward clutch (69) is released to a time the forward clutch (69) is re-engaged.
